(19) Europäisches Patentamt
European Patent Office
Office européen des brevets

(11) EP 3 706 097 A1

(12) EUROPEAN PATENT APPLICATION
published in accordance with Art. 153(4) EPC

(43) Date of publication:
09.09.2020 Bulletin 2020/37

(51) Int Cl.:
G08G 1/015 (2006.01)

(21) Application number: 18905774.8

(22) Date of filing: 15.09.2018

(86) International application number:
PCT/CN2018/105889

(87) International publication number:
WO 2019/153745 (15.08.2019 Gazette 2019/33)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 12.02.2018 CN 201810147439

(71) Applicant: HUAWEI TECHNOLOGIES CO., LTD.
Shenzhen, Guangdong 518129 (CN)

(72) Inventors:
• LI, Jingxuan
Shenzhen, Guangdong 518129 (CN)
• LI, Bo
Shenzhen, Guangdong 518129 (CN)
• LI, Zhengbing
Shenzhen, Guangdong 518129 (CN)

(74) Representative: Gill Jennings & Every LLP
MTH
The Broadgate Tower
20 Primrose Street
London EC2A 2ES (GB)

(54) INFORMATION PROCESSING METHOD AND DEVICE

(57) This application provides an information processing method and apparatus. The method includes: obtaining driving data of a target vehicle (210); and determining an actual vehicle model of the target vehicle based on the driving data (220). According to the vehicle information processing method and apparatus in the embodiments of this application, an actual vehicle model of a vehicle can be identified with relatively high accuracy.

```
┌─────────────────────────────────────────────┐  210
│   Obtain driving data of a target vehicle    │
└─────────────────────────────────────────────┘
                      │
┌─────────────────────────────────────────────┐  220
│  Determine an actual vehicle model of the     │
│  target vehicle based on first driving data   │
│  in the driving data                          │
└─────────────────────────────────────────────┘
```

FIG. 2

EP 3 706 097 A1

# Description

This application claims priority to Chinese Patent Application No. 201810147439.5, filed with the China National Intellectual Property Administration on February 12, 2018 and entitled "INFORMATION PROCESSING METHOD AND APPARATUS", which is incorporated herein by reference in its entirety.

## TECHNICAL FIELD

This application relates to the field of intelligent transportation, and more specifically, to an information processing method and apparatus.

## BACKGROUND

An electronic toll collection (electronic toll collection, ETC) system mainly includes a road side unit (road side unit, RSU) and an on-board unit (on board unit, OBU). The RSU is disposed on an ETC lane, and the OBU is disposed on a vehicle. After the vehicle enters the ETC lane, the RSU communicates with the OBU by using a dedicated short range communication (dedicated short range communication, DSRC) technology, to obtain a registered vehicle model of the vehicle in the OBU and charge the vehicle by using the registered vehicle model, thereby implementing electronic toll collection.

In the prior art, the ETC system mainly determines a toll of the vehicle by reading vehicle model information recorded in the OBU, that is, identification is implemented through a card instead of a vehicle. However, a vehicle model recorded in the OBU is not necessarily an actual vehicle model of the vehicle. For example, a user submits information about a small vehicle during registration, but eventually installs an electronic label OBU on a large vehicle to reduce an expressway toll.

Therefore, how to identify the actual vehicle model of the vehicle with relatively high accuracy is a problem that needs to be urgently resolved.

## SUMMARY

This application provides an information processing method and apparatus, to identify an actual vehicle model of a vehicle with relatively high accuracy.

According to a first aspect, an information processing method is provided, including: obtaining driving data of a target vehicle; and determining an actual vehicle model of the target vehicle based on first driving data in the driving data.

In this embodiment of this application, a server identifies the actual vehicle model of the target vehicle based on an analysis of the driving data of the target vehicle. Driving data of different vehicle models is different, for example, a family car is mainly used during a commute, and a driving time of a truck is relatively even. In other words, the driving data of the target vehicle corresponds to the actual vehicle model. Therefore, the actual vehicle model of the target vehicle may be identified with relatively high accuracy by using the driving data.

In some possible implementations, the determining an actual vehicle model of the target vehicle based on first driving data includes: determining a driving time distribution and/or a driving track distribution of the target vehicle based on the first driving data; and determining the actual vehicle model of the target vehicle based on the driving time distribution and/or the driving track distribution of the target vehicle.

In some possible implementations, the determining the actual vehicle model of the target vehicle based on the driving time distribution and/or the driving track distribution of the target vehicle includes: determining the actual vehicle model of the target vehicle based on a correspondence between at least one driving time distribution and/or driving track distribution and at least one vehicle model and based on the driving time distribution and/or the driving track distribution of the target vehicle.

In the foregoing technical solution, after determining the driving time distribution and/or the driving track distribution of the target vehicle, the server may directly find, based on a predetermined correspondence between a driving time distribution and/or a driving track distribution and a vehicle model, a vehicle model corresponding to the driving time distribution and/or the driving track distribution of the target vehicle. In this way, the actual vehicle model of the target vehicle can be quickly determined.

In some possible implementations, the correspondence is obtained by using driving data of sample vehicles in the following manner: obtaining, based on driving data of each of the sample vehicles, a probability that each vehicle is classified as each of a plurality of vehicle models, and a driving time distribution and/or a driving track distribution of each vehicle; determining a vehicle model whose vehicle model probability corresponding to a first vehicle is greater than a first threshold as an actual vehicle model of the first vehicle; and obtaining the correspondence based on the actual vehicle model of the first vehicle and a driving time distribution and/or a driving track distribution of the first vehicle.

In some possible implementations, the target vehicle includes a plurality of vehicles; and the determining the actual vehicle model of the target vehicle based on the driving time distribution and/or the driving track distribution of the target vehicle includes: obtaining, based on first driving data of each of the plurality of vehicles, a probability that each vehicle is classified as each of a plurality of vehicle models, and a driving time distribution and/or a driving track distribution of each vehicle; determining a vehicle model whose vehicle model probability corresponding to a first vehicle is greater than a first threshold as an actual vehicle model of the first vehicle; grouping driving time distributions and/or driving track distributions that are the same in driving time distributions and/or driving track distributions of the plurality of vehicles into one type of driving time distribution and/or driving track distribution; for vehicles corresponding to each type of driving time distribution and/or driving track distribution, determining a proportion of the first vehicle in vehicles of each vehicle model; for the vehicles corresponding to each type of driving time distribution and/or driving track distribution, determining a target vehicle model whose proportion of the first vehicle is greater than a second threshold; and for a second vehicle in the vehicles corresponding to each type of driving time distribution and/or driving track distribution, determining the target vehicle model as a vehicle model of the second vehicle, where the second vehicle is a vehicle in the plurality of vehicles except the first vehicle.

In the foregoing technical solution, after determining the vehicle model of the first vehicle, the server may determine the vehicle model of the first vehicle as the vehicle model of the second vehicle when a specific condition is met. In this way, a quantity of vehicles whose actual vehicle models may be determined by the server offline can be significantly increased.

In some possible implementations, the determining a driving time distribution and/or a driving track distribution of the target vehicle based on the first driving data includes: identifying parking points of the target vehicle based on the first driving data; determining frequently-used parking points of the target vehicle based on appearance frequency of the parking points; determining geographical locations of the frequently-used parking points based on map information; and combining and connecting frequent itemsets of the frequently-used parking points based on the geographical locations of the frequently-used parking points to obtain the driving track distribution of the target vehicle.

In some possible implementations, the identifying parking points of the target vehicle based on the first driving data includes: sequentially determining circles by using different positioning points of the target vehicle as centers and a third threshold as a radius; determining a maximum time difference between positioning points in each circle; comparing the maximum time difference with a fourth threshold, and if the maximum time difference is greater than the fourth threshold, determining a center of the circle corresponding to the maximum time difference as a candidate parking point; and calculating a central point of all candidate parking points, where the central point is a parking point of the target vehicle.

In some possible implementations, the determining an actual vehicle model of the target vehicle based on first driving data includes: obtaining, based on the first driving data and a first model, probabilities that the target vehicle is classified as different vehicle models, where the first model is obtained through training based on a registered vehicle model of a sample vehicle in an on-board unit OBU and driving data of the sample vehicle; and determining the actual vehicle model of the target vehicle based on the probabilities.

In the foregoing technical solution, because there are a large quantity of sample vehicles, the first model obtained through training based on registered vehicle models of the sample vehicles conforms to actual vehicle model distribution overall. In this way, accuracy of determining the actual vehicle model of the target vehicle by the server online based on the first model is relatively high.

In some possible implementations, the method further includes: verifying service behavior information of the target vehicle or outputting the service behavior information of the target vehicle based on the actual vehicle model.

In some possible implementations, the method further includes: determining, based on second driving data in the driving data and a target area, a moment at which the target vehicle exits from the target area, where the target area is an area of a toll station; and

the verifying service behavior information of the target vehicle or outputting the service behavior information of the target vehicle based on the actual vehicle model includes: verifying, at the moment at which the target vehicle exits from the target area, whether the target vehicle pays a fee corresponding to the actual vehicle model.

In the foregoing technical solution, the server may determine a range of the target area based on diagonal coordinates of the target area, and can determine coordinates of the target vehicle based on the driving data of the target vehicle, that is, longitude and latitude of the target vehicle at a current moment. The server may automatically identify, by using the range of the target area and the coordinates of the target vehicle, a behavior that the target vehicle leaves the toll station. When the target vehicle leaves the toll station, the server may determine whether the target vehicle pays the fee. If the target vehicle pays the fee, the server may verify, based on the determined actual vehicle model, whether paid information of the target vehicle corresponds to the actual vehicle model. In this way, a toll dodging behavior of the target vehicle can be reduced.

In some possible implementations, the determining, based on second driving data and a target area, a moment at which the target vehicle exits from the target area includes: determining, based on the second driving data, whether the target vehicle is inside the target area at a moment t and a moment t-1; and if the target vehicle is inside the target area at the moment t-1 and is outside the target area at the moment t, determining that the moment t is the moment at which the target vehicle exits from the target area.

In some possible implementations, the determining, based on the second driving data, whether the target vehicle is inside the target area at a moment t and a moment t-1 includes: determining, in a horizontal direction or a vertical direction, a ray using a positioning point of the target vehicle at the moment t or the moment t-1 as an endpoint; and determining, based on a quantity of intersecting points between the ray and the target area, whether the target vehicle is inside the target area at the moment t and the moment t-1.

In some possible implementations, the determining, based on a quantity of intersecting points between the ray and the target area, whether the target vehicle is inside the target area at the moment t and the moment t-1 includes: if the quantity of intersecting points between the ray and the target area is an odd number, determining that the target vehicle is inside the target area at the moment t or the moment t-1; and if the quantity of intersecting points between the ray and the target area is an even number, determining that the target vehicle is outside the target area at the moment t or the moment t-1.

In some possible implementations, the determining, based on the second driving data, whether the target vehicle is inside the target area at a moment t and a moment t-1 further includes: determining, based on the second driving data, that the target vehicle is inside a minimum bounding area of the target area at the moment t and the moment t-1, where the minimum bounding area is a rectangle.

In the foregoing technical solution, the server first determines whether the target vehicle is inside the minimum bounding area, and then if the target vehicle is inside the minimum bounding area, determines whether the target vehicle is inside the target area. If the target vehicle is not inside the minimum bounding area, the server may directly determine that the target vehicle is outside the target area. Because a speed of determining whether the target vehicle is inside the minimum bounding area is relatively high, it may be quickly determined whether the target vehicle is inside the target area, to determine in real time whether the target vehicle is to leave the toll station.

In some possible implementations, the determining, based on the second driving data, that the target vehicle is inside a minimum bounding area of the target area at the moment t and the moment t-1 includes: obtaining coordinates of two diagonals of the minimum bounding area; determining a range of the minimum bounding area based on the coordinates; obtaining coordinates of the target vehicle at the moment t and the moment t-1 based on the second driving data; and determining, based on the coordinates of the target vehicle at the moment t and the moment t-1 and the range of the minimum bounding area, that the target vehicle is inside the minimum bounding area at the moment t and the moment t-1.

In some possible implementations, the method further includes: establishing a spatial index based on the target area and the minimum bounding area; and the determining, based on the coordinates of the target vehicle at the moment t and the moment t-1 and the range of the minimum bounding area, that the target vehicle is inside the minimum bounding area at the moment t and the moment t-1 includes: determining, based on the coordinates of the target vehicle at the moment t and the moment t-1, the range of the minimum bounding area, and the spatial index, that the target vehicle is inside the minimum bounding area at the moment t and the moment t-1.

In the foregoing technical solution, by establishing the spatial index, the server may quickly determine whether the target vehicle is inside the minimum bounding area.

In some possible implementations, the method further includes: the verifying service behavior information of the target vehicle or outputting the service behavior information of the target vehicle based on the actual vehicle model includes: verifying paid information of the target vehicle or outputting to-be-paid information of the target vehicle based on the actual vehicle model.

In the foregoing technical solution, after determining the actual vehicle model of the target vehicle, the server may output the actual vehicle model of the target vehicle to a roadside apparatus, and the roadside apparatus may charge the target vehicle based on the received actual vehicle model. Alternatively, the server may verify whether vehicle model information of the target vehicle during payment is consistent with the determined actual vehicle model. If the vehicle model information is inconsistent with the determined actual vehicle model, a series of measures may be taken for the target vehicle, to reduce a loss caused by a "applying ETC card for small vehicle to large one " behavior of the target vehicle to an operator.

In some possible implementations, the method further includes: determining a driving mileage of the target vehicle on an expressway in a preset time based on the first driving data; and the verifying paid information of the target vehicle or outputting to-be-paid information of the target vehicle based on the actual vehicle model includes: outputting the to-be-paid information of the target vehicle based on the actual vehicle model and the driving mileage.

In the foregoing technical solution, the server may identify an actual driving mileage of the target vehicle based on the driving data of the target vehicle, for example, through track tracing. In this way, a card theft behavior of the target vehicle can be avoided, thereby reducing an economic loss caused by a toll dodging behavior during card theft to the operator.

In some possible implementations, the paid information includes a registered vehicle model sent by the OBU during payment.

In some possible implementations, before the determining an actual vehicle model of the target vehicle based on first driving data in the driving data, the method further includes: identifying noise data in the driving data; correcting the noise data to obtain corrected driving data; and the determining an actual vehicle model of the target vehicle based on first driving data in the driving data includes: determining the actual vehicle model of the target vehicle based on the first driving data in the corrected driving data.

In the foregoing technical solution, because the actual vehicle model of the target vehicle is determined based on the driving data of the target vehicle, the server identifies and corrects the noise data in the driving data, so that accuracy of the driving data can be increased. In this way, accuracy of determining the actual vehicle model of the target vehicle by the server based on the driving data is relatively high.

In some possible implementations, the identifying noise data in the driving data includes: calculating an average value and a variance of driving data in a time period before the moment t and a time period after the moment t; and comparing driving data at the moment t with a multiple of the variance, and if the driving data at the moment t is greater than the multiple of the variance, determining that the driving data at the moment t is the noise data; and the correcting the noise data includes: correcting the noise data based on the average value.

In some possible implementations, the correcting the noise data based on the average value includes: replacing the noise data with the average value to obtain initially corrected data; and correcting the initially corrected data based on a road on a map.

In the foregoing technical solution, the initially corrected data is corrected again based on an actual road distribution on the map, and some driving data that is not about driving on a road may be corrected to the road.

In some possible implementations, the identifying noise data in the driving data includes: identifying the noise data in the driving data based on a second model, where the second model is obtained by performing Kalman filtering on a displacement and an acceleration of the target vehicle; and the correcting the noise data includes: correcting the noise data based on the second model.

In the foregoing technical solution, a Kalman filter is established based on a status equation. Because a displacement and a speed in the driving data cannot change abruptly, a status at a current moment may be estimated by using a status of the target vehicle at a previous moment, so that the noise data in the driving data can be identified.

In some possible implementations, the correcting the noise data based on the second model includes: initially correcting the noise data based on the second model to obtain initially corrected data; and correcting the initially corrected data based on a road on a map.

In some possible implementations, the correcting the initially corrected data based on a road on a map includes: determining a circle using a positioning point of the initially corrected data as a center and a maximum positioning error as a radius; determining a projection distance from the positioning point to a road intersecting the circle; and determining a projection point on a road with a shortest projection distance as a positioning point of the corrected driving data.

According to a second aspect, a vehicle information processing method is provided, including: receiving driving data sent by a target vehicle; determining, based on the driving data and a target area, a moment at which the target vehicle exits from the target area, where the target area is an area of a toll station; obtaining an actual vehicle model of the target vehicle; and determining whether the target vehicle pays a fee corresponding to the actual vehicle model at the moment at which the target vehicle exits from the target area.

In this embodiment of this application, a server determines the target area, and may determine a range of the target area based on diagonal coordinates of the target area, and determine coordinates of the target vehicle based on the driving data of the target vehicle, that is, longitude and latitude. The server may automatically identify, by using the range of the target area and the coordinates of the target vehicle, a behavior that the target vehicle enters or leaves the toll station. When the target vehicle leaves the toll station, the server may identify, based on the obtained actual vehicle model of the target vehicle, whether the target vehicle pays the fee corresponding to the actual vehicle model. In this way, a toll dodging behavior of the target vehicle can be reduced.

In some possible implementations, the determining, based on the driving data and a target area, a moment at which the target vehicle exits from the target area includes: determining, based on the driving data, whether the target vehicle is inside the target area at a moment t and a moment t-1; and if the target vehicle is inside the target area at the moment t-1 and is outside the target area at the moment t, determining that the moment t is the moment at which the target vehicle exits from the target area.

In some possible implementations, the determining, based on the driving data, whether the target vehicle is inside the target area at a moment t and a moment t-1 includes: determining, in a horizontal direction or a vertical direction, a ray using a positioning point of the target vehicle at the moment t or the moment t-1 as an endpoint; and determining, based on a quantity of intersecting points between the ray and the target area, whether the target vehicle is inside the target area at the moment t and the moment t-1.

In some possible implementations, the determining, based on a quantity of intersecting points between the ray and the target area, whether the target vehicle is inside the target area at the moment t and the moment t-1 includes: if the quantity of intersecting points between the ray and the target area is an odd number, determining that the target vehicle is inside the target area at the moment t or the moment t-1; and if the quantity of intersecting points between the ray and the target area is an even number, determining that the target vehicle is outside the target area at the moment t or the moment t-1.

In some possible implementations, the determining, based on the driving data, whether the target vehicle is inside the target area at a moment t and a moment t-1 further includes: determining, based on the driving data, that the target vehicle is inside a minimum bounding area of the target area at the moment t and the moment t-1, where the minimum bounding area is a rectangle.

In the foregoing technical solution, the server first determines whether the target vehicle is inside the minimum bounding area, and then if the target vehicle is inside the minimum bounding area, determines whether the target vehicle is inside the target area. If the target vehicle is not inside the minimum bounding area, the server may directly determine that the target vehicle is outside the target area. Because a speed of determining whether the target vehicle is inside the minimum bounding area is relatively high, it may be quickly determined whether the target vehicle is inside the target area, to determine in real time whether the target vehicle is to enter or leave the toll station.

In some possible implementations, the determining, based on the driving data, that the target vehicle is inside a minimum bounding area of the target area at the moment t and the moment t-1 includes: obtaining coordinates of two diagonals of the minimum bounding area; determining a range of the minimum bounding area based on the coordinates; obtaining coordinates of the target vehicle at the moment t and the moment t-1 based on the driving data; and determining, based on the coordinates of the target vehicle at the moment t and the moment t-1 and the range of the minimum bounding area, that the target vehicle is inside the minimum bounding area at the moment t and the moment t-1.

In some possible implementations, the method further includes: establishing a spatial index based on the target area and the minimum bounding area; and the determining, based on the coordinates of the target vehicle at the moment t and the moment t-1 and the range of the minimum bounding area, that the target vehicle is inside the minimum bounding area at the moment t and the moment t-1 includes: determining, based on the coordinates of the target vehicle at the moment t and the moment t-1, the range of the minimum bounding area, and the spatial index, that the target vehicle is inside the minimum bounding area at the moment t and the moment t-1.

In the foregoing technical solution, by establishing the spatial index, the server may quickly determine whether the target vehicle is inside the minimum bounding area.

In some possible implementations, before the determining, based on the driving data and a target area, a moment at which the target vehicle exits from the target area, the method further includes: identifying noise data in the driving data; correcting the noise data to obtain corrected driving data; and the determining, based on the driving data and a target area, a moment at which the target vehicle exits from the target area includes: determining, based on the corrected driving data and the target area, the moment at which the target vehicle exits from the target area.

In the foregoing technical solution, because that the target vehicle leaves the toll station is determined based on the driving data of the target vehicle, the server identifies and corrects the noise data in the driving data, so that accuracy of the driving data can be increased. Therefore, accuracy of determining, by the server based on the driving data, whether the target vehicle is to enter or leave the toll station is relatively high.

In some possible implementations, the identifying noise data in the driving data includes: calculating an average value and a variance of driving data in a time period before the moment t and a time period after the moment t; and comparing driving data at the moment t with a multiple of the variance, and if the driving data at the moment t is greater than the multiple of the variance, determining that the driving data at the moment t is the noise data; and the correcting the noise data includes: correcting the noise data based on the average value.

In some possible implementations, the correcting the noise data based on the average value includes: replacing the noise data with the average value to obtain initially corrected data; and correcting the initially corrected data based on a road on a map.

In the foregoing technical solution, the initially corrected data is corrected again based on an actual road distribution on the map, and some driving data that is not about driving on a road may be corrected to the road.

In some possible implementations, the identifying noise data in the driving data includes: identifying the noise data in the driving data based on a model, where the model is obtained by performing Kalman filtering on a displacement and an acceleration of the target vehicle; and the correcting the noise data includes: correcting the noise data based on the second model.

In the foregoing technical solution, a Kalman filter is established based on a status equation. Because a displacement and a speed in the driving data cannot change abruptly, a status at a current moment may be estimated by using a status of the target vehicle at a previous moment, so that the noise data in the driving data can be identified.

In some possible implementations, the correcting the noise data based on the model includes: initially correcting the noise data based on the model to obtain initially corrected data; and correcting the initially corrected data based on a road on a map.

In some possible implementations, the correcting the initially corrected data based on a road on a map includes: determining a circle using a positioning point of the initially corrected data as a center and a maximum positioning error as a radius; determining a projection distance from the positioning point to a road intersecting the circle; and determining a projection point on a road with a shortest projection distance as a positioning point of the corrected driving data.

According to a third aspect, a vehicle information processing apparatus is provided, including modules for performing the method in any one of the first aspect or the possible implementations of the first aspect.

According to a fourth aspect, a vehicle information processing apparatus is provided, including modules for performing the method in any one of the second aspect or the possible implementations of the second aspect.

According to a fifth aspect, a vehicle information processing apparatus is provided, including a processor and a memory. The memory is configured to store a computer instruction, the processor is configured to execute the computer instruction stored in the memory, and when the computer instruction is executed, the processor is configured to perform the method in any one of the first aspect or the possible implementations of the first aspect.

According to a sixth aspect, a vehicle information processing apparatus is provided, including a processor and a memory. The memory is configured to store a computer instruction, the processor is configured to execute the computer instruction stored in the memory, and when the computer instruction is executed, the processor is configured to perform the method in any one of the second aspect or the possible implementations of the second aspect.

According to a seventh aspect, an electronic toll collection ETC system is provided, and the ETC system includes the vehicle information processing apparatus in the fifth aspect.

According to an eighth aspect, an electronic toll collection ETC system is provided, and the ETC system includes the vehicle information processing apparatus in the sixth aspect.

According to a ninth aspect, a computer readable storage medium is provided, including a computer instruction. When the computer instruction is executed on a computer, the computer is enabled to perform the method in any one of the first aspect or the possible implementations of the first aspect.

According to a tenth aspect, a computer readable storage medium is provided, including a computer instruction. When the computer instruction is executed on a computer, the computer is enabled to perform the method in any one of the second aspect or the possible implementations of the second aspect.

According to an eleventh aspect, a computer program product including an instruction is provided. When the computer program product is run on a computer, the computer is enabled to perform the method in any one of the first aspect or the possible implementations of the first aspect.

According to a twelfth aspect, a computer program product including an instruction is provided. When the computer program product is run on a computer, the computer is enabled to perform the method in any one of the second aspect or the possible implementations of the second aspect.

**BRIEF DESCRIPTION OF DRAWINGS**

FIG. 1 is a schematic diagram of a network architecture according to an embodiment of this application;
FIG. 2 is a schematic flowchart of an information processing method according to an embodiment of this application;
FIG. 3 is a schematic diagram of comparison before and after correction of driving data of a target vehicle according to an embodiment of this application;
FIG. 4 is a schematic flowchart of a possible implementation of step 220 in FIG. 2;
FIG. 5 is a schematic diagram of a waveform feature of a target vehicle according to an embodiment of this application;
FIG. 6 is a schematic diagram of a parking point of a target vehicle according to an embodiment of this application;
FIG. 7 is a schematic flowchart of a possible implementation of step 220 in FIG. 2;
FIG. 8 is a schematic diagram of a target area and a minimum bounding area according to an embodiment of this application;
FIG. 9 is a schematic diagram of a manner of determining that a target vehicle is inside a target area according to an embodiment of this application;
FIG. 10 is a schematic structural diagram of an information processing apparatus according to an embodiment of this application; and
FIG. 11 is a schematic structural diagram of an information processing apparatus according to an embodiment of this application.

**DESCRIPTION OF EMBODIMENTS**

The following describes technical solutions of this application with reference to accompanying drawings.

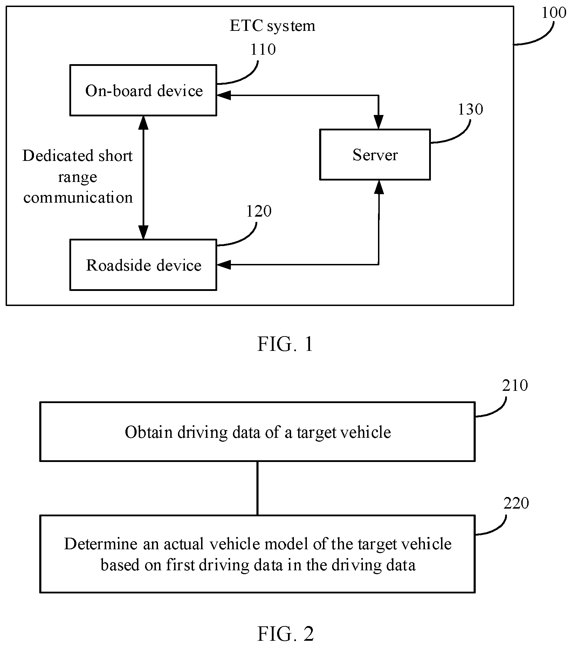

FIG. 1 is a schematic diagram of a network architecture of an ETC system that may be applied to an embodiment of this application. As shown in FIG. 1, the ETC system 100 may include an on-board apparatus 110, a roadside apparatus 120, and a server 130.

The on-board apparatus 110 may be configured to collect, send, and store driving data of a vehicle, for example, a driving speed, a direction, a displacement, and a daily driving time of the vehicle. The on-board apparatus 110 may include an OBU, a positioning device (for example, a global positioning system (global positioning system, GPS)), a tri-axis accelerometer, an event data recorder, any on-board sensor, and the like. The GPS may be configured to collect longitude, latitude, a height, a direction, a speed, and the like of the vehicle during driving. The tri-axis accelerometer may be configured to collect linear accelerations of the vehicle in three directions X, Y, and Z in a driving process. The event data recorder may be configured to record an image and a sound of the vehicle in the driving process.

The roadside apparatus 120 may be configured to: read and write data stored in the on-board apparatus 110, collect external information of the vehicle, or control passing of the vehicle. The roadside apparatus 120 may further calculate a toll of the vehicle, and automatically deduct the toll or the like from a dedicated account of a user of the vehicle. The roadside apparatus 120 may include an RSU, a phased array antenna, a lane camera, an induction coil, an automatic barrier, and the like.

The server 130 may be configured to receive, store, and process a request sent by a client, and the server 130 may be a physical cluster, a virtual cloud, or the like.

Optionally, the client may be the on-board apparatus 110, or may be the roadside apparatus 120 or the like.

The roadside apparatus 120 may establish a microwave communication link to the on-board apparatus 110 by using a DSRC technology, to implement communication between the roadside apparatus 120 and the on-board apparatus 110. The on-board apparatus 110 may send the collected driving data of the vehicle to the server 130, and the server 130 stores the received driving data of the vehicle in a chronological order. The server 130 may send indication information to the on-board apparatus 110. The indication information may instruct the on-board apparatus 110 to enable track tracing or the like. The roadside apparatus 120 may send the calculated toll of the vehicle to the server 130. After receiving the toll of the vehicle sent by the roadside apparatus 120, the server 130 may check whether the toll of the vehicle is abnormal.

FIG. 2 is a schematic flowchart of an information processing method according to an embodiment of this application. The method in FIG. 2 may be performed by a server, and the server may be the server 130 in FIG. 1. Certainly, the method in FIG. 2 may be alternatively performed by another device. This is not limited in this embodiment of this application.

The method in FIG. 2 may include steps 210 and 220. The following separately describes the steps 210 and 220 in detail.

In step 210, driving data of a target vehicle is obtained.

Optionally, the driving data of the target vehicle may include at least one of the following: longitude, latitude, a height, a direction, a speed, a displacement, a linear acceleration in an X direction, a linear acceleration in a Y direction, a linear acceleration in a Z direction, or the like of the target vehicle. X, Y, and Z represent an X-axis, a Y-axis, and a Z-axis in a spatial Cartesian coordinate system.

Optionally, a server may obtain the driving data of the target vehicle by collecting a signal sent by an on-board apparatus mounted on the target vehicle.

Optionally, the server may collect, with fixed frequency, the signal sent by the on-board apparatus. Frequency with which the server collects a sensor signal may be Is, 0.1s, or the like. This is not limited in this embodiment of this application.

Optionally, the signal sent by the on-board apparatus may be a sensor signal.

The sensor signal may include but is not limited to: positioning information of the on-board apparatus that is sent by a satellite navigation system and that is received by the on-board apparatus, and spatial acceleration information that is read from a tri-axis accelerometer built in the on-board apparatus. A series of driving data such as the longitude, the latitude, the height, the direction, the speed, and the displacement of the target vehicle may form positioning information of the target vehicle, and driving data such as the linear acceleration in the X direction, the linear acceleration in the Y direction, and the linear acceleration in the Z direction may form acceleration information of the target vehicle.

Optionally, the on-board apparatus mounted on the target vehicle may send driving data of the target vehicle in a specific time period to the server. The driving data in the specific time period may be driving data in one day, driving data in two days or one week, or the like. This is not limited in this application.

Optionally, the on-board apparatus may alternatively send driving data of the target vehicle at a current moment to the server in real time.

It should be understood that, due to terrain blocking, a weather condition, or the like, strength of the signal collected by the server may be weakened. Alternatively, because the signal is affected by an interference source, or even the signal is just in a satellite positioning dead zone at a specified moment, a deviation may be caused in calculation of a GPS receiver, and consequently noise data may appear in the driving data of the target vehicle.

Therefore, the server may identify the noise data in the driving data, and correct the noise data to obtain corrected driving data. There may be a plurality of implementations of this process. This is not specifically limited in this embodiment of this application.

Optionally, the noise data may be data indicating that there is a deviation in the driving data received by the server.

For example, if the target vehicle is at a location of 103 degrees east longitude and 34 degrees north latitude at a moment t, and a location of the target vehicle at the moment t obtained by the server is 115 degrees east longitude and 41 degrees north latitude, it may be determined that driving data of the target vehicle at the moment t obtained by the server is the noise data.

Optionally, the server may calculate an average value and a variance of driving data in a time period before the moment t and a time period after the moment t, and then compare the driving data at the moment t with a multiple of the variance. If the driving data at the moment t is greater than the multiple of the variance, it may be determined that the driving data at the moment t is the noise data.

Certainly, the server may alternatively calculate an average value and a standard deviation of driving data in a time period before the moment t and a time period after the moment t, obtain a variance by using the standard deviation, and then compare the driving data at the moment t with a multiple of the variance. If the driving data at the moment t is greater than the multiple of the variance, it may be determined that the driving data at the moment t is the noise data.

Optionally, the on-board apparatus may obtain driving data of the target vehicle, for example, longitude and latitude of the target vehicle, by using a GPS at a specific update rate, and then send the driving data to the server. For example, the update rate of the GPS may be Is or 0.1s.

For example, if the server needs to detect whether the driving data of the target vehicle at the moment t is the noise data, the server may first calculate an average value and a standard deviation of longitude and latitude corresponding to time periods $t-k, t-(k-1), t-(k-2), ..., t-1, t+1, ..., t+(k-2), t+(k-1)$, and $t+k$, and then determine whether values of longitude and latitude of the target vehicle at the moment t fall within a range of three times a variance. If the range is exceeded, it may be determined that the driving data at the moment t is the noise data.

It should be understood that the specific examples in the embodiments of this application are merely intended to help a person skilled in the art better understand the embodiments of this application, rather than limit the scope of the embodiments of this application.

After identifying the noise data in the driving data, the server may correct the noise data based on the average value mentioned above.

Optionally, the server may replace the noise data with the average value to obtain initially corrected data, and then correct the initially corrected data based on a road on a map.

In an example, the server may roughly determine, based on a driving track of the target vehicle, a road on which the target vehicle drives. Specifically, the server may determine a circle using a positioning point of the initially corrected data as a center and a maximum positioning error as a radius. Roads intersecting the circle may form a road set, and the road set includes an optimal matching road.

Then, the server may determine the optimal matching road and a positioning point of the corrected driving data. Specifically, the server may determine a projection distance from the positioning point to a road intersecting the circle, and determine a road with a shortest projection distance as the optimal matching road. A projection point on the optimal matching road is the positioning point of the corrected driving data.

Optionally, the driving track of the target vehicle mentioned above may be obtained by arranging a series of driving data of the target vehicle in a chronological order.

Optionally, the maximum positioning error mentioned above may be read from the GPS. In a normal case, a positioning error of the GPS is within 10 meters to 20 meters.

Optionally, a road matching result at the moment t may be based on a road matching result at a moment t-1. If the road matching result at the moment t-1 is in a road matching set at the moment t, the server may determine a road at the moment t-1 as an optimal matching road at the moment t. If the road matching result at the moment t-1 is not in the road matching set at the moment t, the server may determine a road with a shortest projection distance as the optimal matching road at the moment t.

For example, it is assumed that the driving data at the moment t is the noise data, and the maximum positioning error read from the GPS is 20 meters. After replacing the noise data with the average value of the driving data in the time period before the moment t and in the time period after the moment t, the server may obtain initially corrected data at the moment t. Then, the server may determine a circle using a positioning point of the initially corrected data at the moment t as a center and 20 meters as a radius, and roads intersecting the circle include L1, L2, and L3.

Then, the server may separately determine projection distances from the positioning point of the initially corrected data at the moment t to L1, L2, and L3, and determine a road with a shortest projection distance as the optimal matching road. For example, if a projection distance from the initially corrected data at the moment t to L1 is five meters, a projection distance from the initially corrected data at the moment t to L2 is three meters, and a projection distance from the initially corrected data at the moment t to L3 is two meters, it may be determined that L3 is the optimal matching road, and a projection point on L3 is the positioning point of the corrected driving data at the moment t.

Optionally, the server may identify the noise data in the driving data based on a model. The server may perform Kalman filtering on the displacement and the acceleration in the driving data of the target vehicle to obtain an optimal estimation model, and identify the noise data in the driving data based on the obtained optimal estimation model.

For example, assuming that driving data of the target vehicle at the moment t-1 is known, the following formulas are met:

$$p_t = p_{t-1} + v_{t-1} \times \Delta t + \frac{1}{2} u_t \times \Delta t^2 \quad (1)$$

$$v_t = v_{t-1} + u_t \times \Delta t \quad (2)$$

The subscript t represents a driving status of the target vehicle at the moment t, the subscript t-1 represents a driving status of the target vehicle at the moment t-1, p represents the displacement of the target vehicle, v represents the speed of the target vehicle, and u represents the acceleration of the target vehicle.

In this case, a status prediction formula of the target vehicle at the moment t may be obtained:

$$\begin{bmatrix} p_t \\ v_t \end{bmatrix} = F \begin{bmatrix} p_{t-1} \\ v_{t-1} \end{bmatrix} + Bu_t \qquad (3)$$

In the formula: $F = \begin{bmatrix} 1 & \Delta t \\ 0 & 1 \end{bmatrix}$ is a status tran-

sition matrix, and $B = \begin{bmatrix} \dfrac{\Delta t^2}{2} \\ \Delta t \end{bmatrix}$ is a control matrix.

Alternatively, a spatial status model of the target vehicle may be written as:

$$x_t = Fx_{t-1} + Bu_t + w_t \qquad (4)$$

$x_t$ includes an observed target such as the displacement or the speed, and $w_t$ is process noise that conforms to a Gaussian distribution.

In the foregoing technical solution, a Kalman filter is established based on a dynamic process. Because the displacement and the speed of the target vehicle cannot change abruptly, the status at the moment t may be predicted by using the status of the target vehicle at the moment t-1, so that the noise data can be identified. For example, if an acceleration of the target vehicle at the moment t-1 is zero, but a speed at the moment t changes, it may be determined that there is an observation error at the moment t, and the driving data at the moment t is the noise data.

Optionally, the on-board apparatus may obtain positioning information of the target vehicle by using the GPS and an acceleration integral at a specific update rate, and then send the driving data to the server. For example, the update rate of the acceleration integral includes but is not limited to 0.1s or 0.01s.

Optionally, the server may correct the identified noise data based on the optimal estimation model. Specifically, the server may initially correct the noise data based on the optimal estimation model to obtain initially corrected data, and then correct the initially corrected data based on a road on a map.

A specific implementation process in which the server corrects the initially corrected data based on the road on the map is described in detail in the foregoing content. For brevity of the content, details are not described herein again.

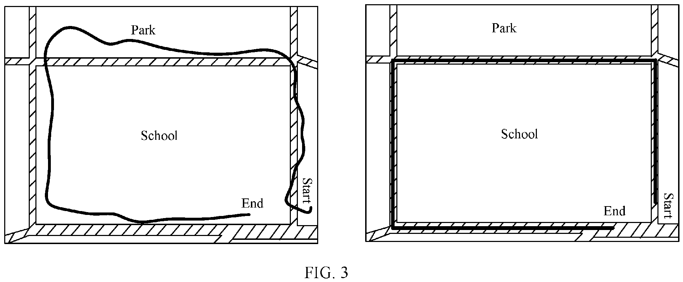

As shown in FIG. 3, a left diagram shows a driving track of the target vehicle after the initial correction, and a right diagram shows a corrected driving track of the target vehicle. It may be learned from FIG. 3 that after the initial correction, some positioning points of the target vehicle are not on the road. After the server corrects the initially corrected data again based on the road on the map, all positioning points of the target vehicle are on the road.

In the foregoing technical solution, because an actual vehicle model of the target vehicle is determined based on the driving data of the target vehicle, the server identifies and corrects the noise data in the driving data, so that accuracy of the driving data can be increased. In this way, accuracy of determining the actual vehicle model of the target vehicle by the server based on the driving data is relatively high.

In step 220, the actual vehicle model of the target vehicle is determined based on first driving data in the driving data.

Optionally, a vehicle model may be represented as a vehicle model corresponding to a toll of a vehicle, for example, a passenger car with fewer than seven seats, a passenger car with more than 40 seats, or a truck with a load of 5 tons to 10 tons.

Optionally, the first driving data may indicate driving data of the target vehicle in a specific time period. The specific time period may be one day, one week, or the like.

In this embodiment of this application, the target vehicle may include one vehicle or a plurality of vehicles. This is not limited in this application.

Optionally, when the target vehicle includes one vehicle, the server may determine the actual vehicle model of the target vehicle in real time based on the driving data of the target vehicle.

Optionally, when the target vehicle includes a plurality of vehicles, the server may determine actual vehicle models of the plurality of vehicles offline in a specific time based on obtained first driving data of the plurality of vehicles in a preset time period. For example, the preset time period may be one day.

For example, the server may determine the actual vehicle models of the plurality of vehicles offline at 12 p.m. every night based on first driving data of the plurality of vehicles that is obtained on this day.

Optionally, the server may alternatively determine the actual vehicle model of the target vehicle based on the first driving data in the corrected driving data.

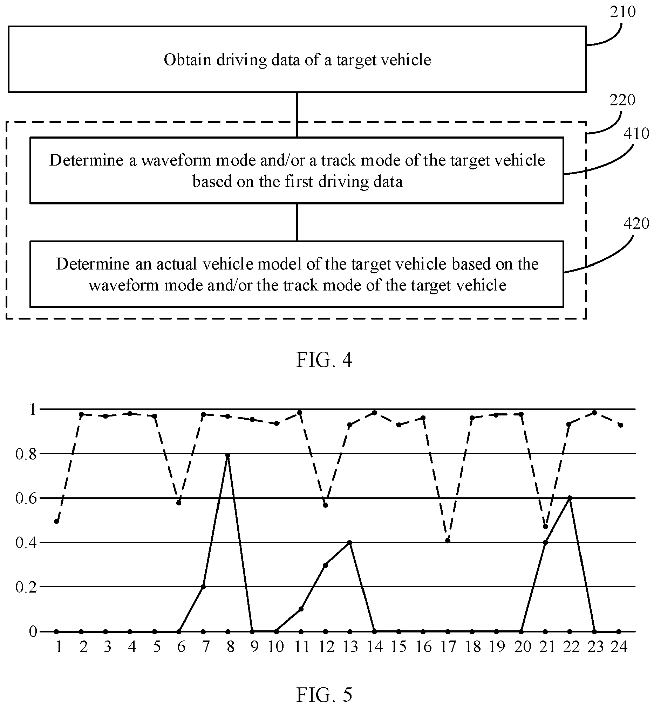

There may be a plurality of implementations of step 220. The following describes specific implementations of step 220 in detail with reference to FIG. 4 to FIG. 7.

FIG. 4 is a schematic flowchart of a possible implementation of step 220 in FIG. 2. The method in FIG. 4 may include steps 410 and 420.

In step 410, a driving time distribution and/or a driving track distribution of the target vehicle are/is determined based on the first driving data.

Optionally, a waveform mode may be used to represent the driving time distribution of the target vehicle.

Optionally, a track mode may be used to represent the driving track distribution of the target vehicle.

In other words, the server may determine the waveform mode and/or the track mode of the target vehicle based on the first driving data.

The server may determine the waveform mode of the target vehicle based on first driving data of the target vehicle in a preset time period. Optionally, the preset time period may be one hour, one day, or one week. This is not limited in this application.

For example, the server may determine a waveform feature of the target vehicle based on an hourly driving time of the target vehicle in a day and a daily driving time distribution in a week, and then identify the waveform mode of the target vehicle by using a clustering algorithm.

Optionally, the waveform feature may include daily total driving duration, weekly total driving duration, consecutive driving duration, a time interval between two times of driving, and the like of the target vehicle.

Optionally, the clustering algorithm may be a k-means algorithm, a CLARANS algorithm, a BIRCH algorithm, or the like.

FIG. 5 is a diagram of driving time distributions of a large vehicle and a small vehicle in a day. A dashed line represents a waveform feature of the large vehicle, a solid line represents a waveform feature of the small vehicle, a horizontal axis represents 24 hours in a day, and a longitudinal axis represents how long (0-1 hour) the large vehicle and the small vehicle drive in a time period corresponding to the horizontal axis. It may be learned from FIG. 5 that the waveform feature of the large vehicle is different from that of the small vehicle. The small vehicle is mainly used during a commute, a driving time of the large vehicle is relatively evenly distributed, and total driving duration of the large vehicle in a day is far greater than that of the small vehicle.

The server may determine the track mode of the target vehicle based on the first driving data of the target vehicle.

In an implementation, the server may identify parking points of the target vehicle based on the first driving data of the target vehicle, and determine frequently-used parking points of the target vehicle based on appearance frequency of the identified parking points. The server may determine geographical locations of the frequently-used parking points of the target vehicle based on map information. For example, the geographical locations of the frequently-used parking points may be a gas station, a school, an office building, a residential district, and a building material market. Based on the geographical locations of the frequently-used parking points, frequent itemsets of the frequently-used parking points are combined and connected, so that the track mode of the target vehicle can be obtained.

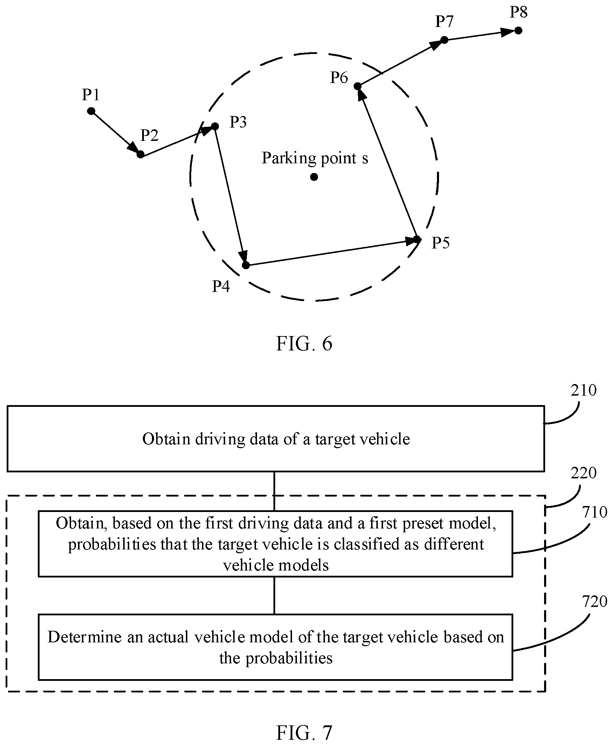

Optionally, a parking point may be obtained based on a group of actual positioning points of the target vehicle, and is not a point at which a speed of the target vehicle is zero. As shown in FIG. 6, a parking point s may be obtained based on positioning points P3, P4, P5, and P6 of the target vehicle.

A parking point may include more important information than other positioning points. For example, a truck mostly appears at a gas station, and a family car often drives to and from areas such as a residential district and a company.

Optionally, a frequently-used parking point may represent a parking point that appears with relatively high frequency in a specific time.

For example, if a parking point 1 appears twice in a day, a parking point 2 appears once in a day, and a parking point 3 appears five times in a day, it may be determined that the parking point 3 is a frequently-used parking point.

Optionally, a frequent itemset may represent a plurality of frequently-used parking points that often appear together. For example, if three frequently-used parking points: a warehouse 1, a gas station 1, and a gas station 2 often appear together, the warehouse 1, the gas station 1, and the gas station 2 may be represented as a frequent itemset.

Optionally, frequent itemsets that are relatively close to each other in terms of time may be combined, and are connected in a chronological order.

For example, the warehouse 1, the gas station 1, and the gas station 2 are a frequent itemset 1, and a warehouse 2, the gas station 2, the gas station 1, and the warehouse 1 are a frequent itemset 2. The frequent itemset 1 and the frequent itemset 2 are relatively close to each other in terms of time, the frequent itemset 1 often appears first, and the frequent itemset 2 often appears later. Therefore, after the frequent itemset 1 and the frequent itemset 2 are combined and connected, a track mode "warehouse 1 -> gas station 1 -> gas station 2 -> warehouse 2 -> gas station 2 -> gas station 1 -> warehouse 1" may be obtained.

In an implementation, in a process of identifying the parking points of the target vehicle, the server may detect each positioning point in a driving track of the target vehicle, and then sequentially determine circles by using different positioning points of the target vehicle as centers and a distance threshold as a radius. Points in a range of each circle may form a set. In each circle, an earliest point and a latest point are determined, and a time difference, that is, a maximum time difference between positioning points, is calculated. Then, the server may compare the maximum time difference with a time threshold, and if the maximum time difference is greater than the time threshold, determine that a center of the circle corresponding to the maximum time difference is a candidate parking point. Then, a center point of all candidate parking points is calculated, and the center point is a parking point of the target vehicle.

Optionally, the server may mine a frequent itemset from frequently-used parking points of the target vehicle by using an association analysis algorithm.

Optionally, the association analysis algorithm may include but is not limited to an FP-growth algorithm, an Apriori algorithm, and the like.

For example, as shown in FIG. 6, P1, P2, P3, ..., and P8 are positioning points of the target vehicle, and it is assumed that the distance threshold is Y and the time threshold is H. The server sequentially determines circles by using P1, P2, P3, ..., P8 as centers and Y as a radius. For example, in a circle using P3 as a center, there are five positioning points P2, P3, P4, P5, and P6, and the five positioning points may form a set. In the set, an earliest point is P2, and a latest point is P6. A time difference between P2 and P6 is calculated, and the time difference obtained through calculation is compared with H. If the time difference is greater than H, it may be determined that P3 is a candidate parking point, and it may be determined, by using the same method, whether remaining seven positioning points are candidate parking points.

If P3, P4, P5, and P6 are eventually determined as candidate parking points, a smallest circle surrounding P3, P4, P5, and P6 is determined. As shown in FIG. 6, a circle represented by dashed lines is the smallest circle surrounding P3, P4, and P5, P6. Then, a center of the circle is calculated, and the center is a parking point of the target vehicle.

In 420, the actual vehicle model of the target vehicle is determined based on the waveform mode and/or the track mode of the target vehicle.

In a possible embodiment, the server may determine the actual vehicle model of the target vehicle based on a correspondence between at least one waveform mode and/or track mode and at least one vehicle model and based on the waveform mode and/or the track mode of the target vehicle.

Optionally, one waveform mode and/or track mode may correspond to one vehicle model.

Optionally, a plurality of waveform modes and/or track modes may alternatively correspond to one vehicle model.

Optionally, the server may obtain the correspondence by using driving data of sample vehicles.

For example, the server may obtain, based on driving data of each of the sample vehicles, a probability that each vehicle is classified as each of a plurality of vehicle models, and a waveform mode and/or a track mode of each vehicle. Then, the server may determine a vehicle model whose vehicle model probability corresponding to a first vehicle is greater than a first threshold as an actual vehicle model of the first vehicle, and obtain the correspondence based on the determined actual vehicle model of the first vehicle and a waveform mode and/or a track mode of the first vehicle.

For example, it is assumed that the first threshold is 0.9. If a waveform mode 1 of a vehicle A in the sample vehicles may be obtained based on driving data of the vehicle A, a probability that the vehicle A is classified as a small vehicle is 0.97, and a probability that the vehicle A is classified as a large vehicle is 0.03, it may be determined that an actual vehicle model of the vehicle A is a small vehicle, and a small vehicle corresponds to the waveform mode 1. If the waveform mode of the target vehicle determined by the server is the waveform mode 1, the server may determine, based on a correspondence between the waveform mode 1 and a small vehicle and based on the waveform mode of the target vehicle, that the actual vehicle model of the target vehicle is a small vehicle.

In the foregoing technical solution, after determining the driving time distribution and/or the driving track distribution of the target vehicle, the server may directly find, based on a predetermined correspondence between a driving time distribution and/or a driving track distribution and a vehicle model, a vehicle model corresponding to the driving time distribution and/or the driving track distribution of the target vehicle. In this way, the actual vehicle model of the target vehicle can be quickly determined.

In a possible embodiment, when the target vehicle includes a plurality of vehicles, the server may obtain, based on first driving data of each of the plurality of vehicles, a probability that each vehicle is classified as each of a plurality of vehicle models, and a waveform mode and/or a track mode of each vehicle, and determine a vehicle model whose vehicle model probability corresponding to a first vehicle is greater than a first threshold as an actual vehicle model of the first vehicle.

Optionally, the server may obtain, based on the first driving data of each of the plurality of vehicles and a classification model, the probability that each vehicle is classified as each of the plurality of vehicle models. A specific implementation is described in FIG. 7, and details are not described herein.

For example, it is assumed that the first threshold is 0.9. The server may obtain, based on first driving data of the plurality of vehicles, probabilities that each vehicle is classified as a large vehicle and as a small vehicle. For example, a probability that a target vehicle 1 is classified as a large vehicle is 0.4, and a probability that the target vehicle 1 is classified as a small vehicle is 0.6; a probability that a target vehicle 2 is classified as a large vehicle is 0.2, and a probability that the target vehicle 2 is classified as a small vehicle is 0.8; a probability that a target vehicle 3 is classified as a large vehicle is 0.99, and a probability that the target vehicle 3 is classified as a small vehicle is 0.01. Because the probability that the target vehicle 3 is classified as a large vehicle is greater than the first threshold 0.9, it may be determined that an actual vehicle model of the target vehicle 3 is a large vehicle, the target vehicle 3 is marked, and the target vehicle 3 is determined as a representative sample of a large vehicle.

It should be understood that, in this manner, the server may determine actual vehicle models of a relatively small quantity of vehicles. For example, if there are 100 target vehicles, the server may determine actual vehicle model of only 30 vehicles. Therefore, actual vehicle models of remaining vehicles need to be further determined.

In an implementation, the server may group waveform modes and/or track modes that are the same in waveform modes and/or track modes of a plurality of vehicles into one type of waveform mode and/or track mode, to obtain a plurality of types of waveform modes and/or track modes. For vehicles corresponding to each type of waveform mode and/or track mode, the server may determine a proportion of a first vehicle in vehicles of each vehicle model, and a target vehicle model whose proportion of the first vehicle is greater than a second threshold. For a second vehicle in the vehicles corresponding to each type of waveform mode and/or track mode, the target vehicle model may be determined as a vehicle model of the second vehicle.

The second vehicle is a vehicle in the plurality of vehicles except the first vehicle.

Optionally, the first vehicle may also be referred to as a marked vehicle, and the second vehicle may also be referred to as an unmarked vehicle. This is not limited in this application.

For example, it is assumed that the second threshold is 0.9, the plurality of waveform modes determined by the server include a waveform mode 1, a waveform mode 2, a waveform mode 3, ..., and the plurality of track modes include a track mode 1, a track mode 2, a track mode 3 .... It is assumed that there are 50 vehicles in the waveform mode 1, 30 vehicles are marked, and 20 vehicles are not marked. In the marked vehicles, there are 17 large vehicles and 13 small vehicles, a proportion of the large vehicles is 0.57, and a proportion of the small vehicles is 0.43. There are 30 target vehicles in the track mode 1, 15 vehicles are marked, and 15 vehicles are not marked. In the marked vehicles, there are 14 small vehicles and one large vehicle, and a proportion of the small vehicles is 0.93. Because a proportion of the marked vehicles in the track mode 1 in the vehicles of the two vehicle models is greater than 0.9, a vehicle model of an unmarked vehicle in the track mode 1 may be determined as a small vehicle.

The term "and/or" in the embodiments of this application describes only an association relationship for describing associated objects and represents that three relationships may exist. For example, A and/or B may represent the following three cases: Only A exists, both A and B exist, and only B exists.

In the foregoing technical solution, the server may determine a vehicle model of an unmarked vehicle as a vehicle model of a marked vehicle when a specific condition is met. In this way, a quantity of vehicles whose actual vehicle models may be determined by the server can be significantly increased.

FIG. 7 is a schematic flowchart of a possible implementation of step 220 in FIG. 2. The method in FIG. 7 may include steps 710 and 720.

A server may determine the actual vehicle model of the target vehicle in real time based on the first driving data of the target vehicle.

In step 710, probabilities that the target vehicle is classified as different vehicle models are obtained based on the first driving data of the target vehicle and a model.

Optionally, the model may be obtained through training based on a registered vehicle model of a sample vehicle in an OBU and driving data of the sample vehicle.

Optionally, the driving data of the sample vehicle may be a statistical feature of a tri-axis acceleration. There may be a plurality of statistical features of the tri-axis acceleration. This is not specifically limited in this embodiment of this application. For example, a statistical feature of an acceleration may include at least one of the following: a maximum acceleration/deceleration, a percentage of an acceleration/a deceleration greater than 1 m/s, and a standard deviation of an acceleration/a deceleration.

Optionally, the model may be a classification model. The classification model may be a random forest, a gradient boosting decision tree (gradient boosting decision tree, GBDT), logistic regression (logistic regression, LR), a support vector machine (support vector machine, SVM), a deep neural network (deep neural network, DNN), or the like.

It should be understood that probabilities obtained based on a quantity of vehicle models of the sample vehicles are probabilities that the target vehicle is classified as the quantity of vehicle models. For example, if the sample vehicles have five vehicle models, the server may obtain, based on driving data of the target vehicle and the classification model, probabilities that the target vehicle is classified as the five vehicle models.

In step 720, the actual vehicle model of the target vehicle is determined based on the obtained probabilities.

Optionally, the server may compare the probabilities that the target vehicle is classified as the different vehicle models with a first threshold. If a probability that the target vehicle is classified as a specified vehicle model is greater than the first threshold, the server may determine the vehicle model as the actual vehicle model of the target vehicle.

For example, it is assumed that the first threshold is 0.9. If a probability that the target vehicle is classified as a large vehicle is 0.95 and a probability that the target vehicle is classified as a small vehicle is 0.05 are obtained based on the driving data of the target vehicle and the classification model, the server may determine that the actual vehicle model of the target vehicle is a large vehicle.

It should be understood that various implementations of the embodiments of this application may be separately implemented or jointly implemented. This is not limited in the embodiments of this application.

In this embodiment of this application, the server identifies the actual vehicle model of the target vehicle based on an analysis of the driving data of the target vehicle. Driving data of different vehicle models is different, for example, a family car is mainly used during a commute, and a driving time of a truck is relatively even. In other words, the driving data of the target vehicle corresponds to the actual vehicle model. Therefore, the actual vehicle model of the target vehicle may be identified with relatively high accuracy by using the driving data.

Optionally, the method may further include: verifying service behavior information of the target vehicle or outputting the service behavior information of the target vehicle based on the actual vehicle model.

Optionally, the service behavior information may include non-payment information and payment information.

Optionally, the non-payment information may include indication information sent by the server to a roadside apparatus, and may further include a passing time of the target vehicle, a picture of the target vehicle, or the like.

In an example, the server may compare the actual vehicle model of the target vehicle with the registered vehicle model, and send the indication information to the roadside apparatus. The indication information is used to indicate a result of comparing the actual vehicle model of the target vehicle with the registered vehicle model.

Optionally, if the indication information indicates that the actual vehicle model of the target vehicle is the same as the registered vehicle model, an automatic barrier of the roadside apparatus is lifted, and the target vehicle passes. If the indication information indicates that the actual vehicle model of the target vehicle is different from the registered vehicle model, the roadside apparatus forbids the target vehicle to pass.

Optionally, the roadside apparatus may include a display screen. If the indication information indicates that the actual vehicle model of the target vehicle is different from the registered vehicle model, the display screen keeps flickering.

Optionally, the roadside apparatus may include an alarm apparatus. If the indication information indicates that the actual vehicle model of the target vehicle is different from the registered vehicle model, the alarm apparatus triggers an alarm, for example, generates a buzzing sound. If the indication information indicates that the actual vehicle model of the target vehicle is the same as the registered vehicle model, the alarm apparatus does not trigger an alarm.

In an example, if the registered vehicle model of the target vehicle is inconsistent with the actual vehicle model, the server may store the passing time of the target vehicle, the picture of the target vehicle, or the like into a database.

Optionally, the payment information may include information indicating whether the target vehicle pays a fee, paid information, and to-be-paid information.

Optionally, the paid information may include a registered vehicle model sent by the OBU during payment of the target vehicle, and the to-be-paid information may include the actual vehicle model of the target vehicle.

In other words, the server may verify the paid information of the target vehicle or output the to-be-paid information of the target vehicle based on the actual vehicle model.

Optionally, the server may output the actual vehicle model of the target vehicle to the roadside apparatus based on the actual vehicle model of the target vehicle, and the roadside apparatus may charge the target vehicle based on the actual vehicle model.

Optionally, if the registered vehicle model of the target vehicle is different from the actual vehicle model, the server may report a related case to a system for further review. For a feedback result from the system, when training a classification model in a next round, the server may increase a sample weight of the target vehicle, and correct registered vehicle model information of the target vehicle that is inconsistent with the feedback result to actual vehicle model information determined by the server.

The server may check whether the actual vehicle model of the target vehicle is consistent with the registered vehicle model. If the actual vehicle model of the target vehicle is inconsistent with the registered vehicle model, for example, a registered vehicle model of a vehicle C is a small vehicle, but a vehicle model identified by the server is a large vehicle, the server may report all inconsistency cases to the system for review, for example, the vehicle C and a vehicle D are suspected as larger vehicles with sub-standard ETC cards. After reporting the inconsistency case to the system, the server may further feed back an actual vehicle model of a target vehicle in the inconsistency case to the system, for example, vehicle C-large vehicle or vehicle D-large vehicle. The server may change the vehicle models of the vehicle C and the vehicle D in registration information to a large vehicle. When the classification model is trained in a next round, weights of sample vehicles corresponding to the vehicle C and the vehicle D are increased, and the vehicle C and the vehicle D are directly added to a representative sample set, that is, the vehicle C and the vehicle D are added in representative samples of a large vehicle. Optionally, the server may verify the paid information of the target vehicle based on the actual vehicle model. If the payment information determined by the server is inconsistent with actual payment information of the target vehicle, the server may reduce a credit score of the target vehicle, or may remotely forbid the target vehicle to use the OBU. If an owner of the target vehicle does not perform clarification processing or make supplementary payment in full, the target vehicle is prevented from entering an expressway next time.

In the foregoing technical solution, the server may verify the paid information of the target vehicle or output the to-be-paid information of the target vehicle to the roadside apparatus based on the actual vehicle model, and the roadside apparatus charges the target vehicle based on the to-be-paid information. In this way, a loss caused by a "larger vehicle with substandard ETC card" behavior of the target vehicle to an operator can be reduced.

Optionally, the server may determine, based on second driving data in the driving data and a target area, a moment at which the target vehicle exits from the target area.

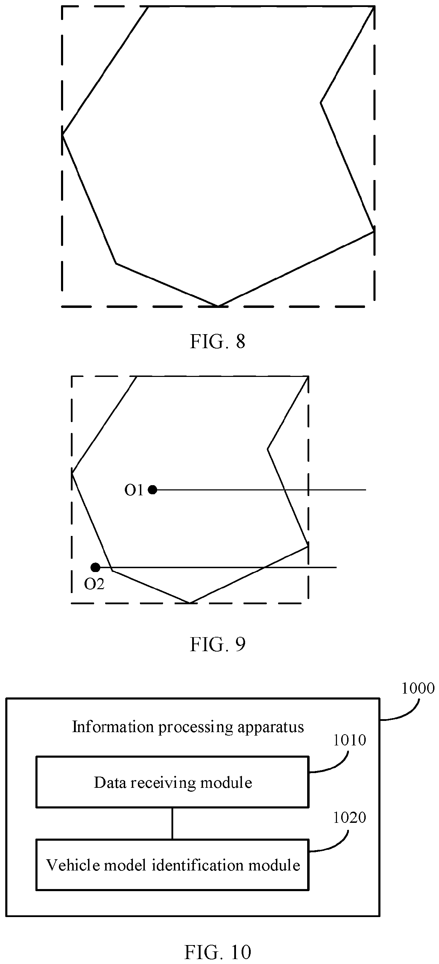

The target area is an area of a toll station. Optionally, the target area may be a polygon. As shown in FIG. 8, an area represented by solid lines is the target area.

Optionally, the server may determine a range of the target area based on a range of the toll station.

Optionally, the second driving data may indicate driving data of the target vehicle at a moment t-1 and a moment t.

Optionally, the second driving data may be longitude and latitude of the target vehicle at the moment t-1 and the moment t.

Optionally, if the target vehicle is inside the target area at the moment t-1 and is outside the target area at the moment t, it may be determined that the moment t is the moment at which the target vehicle exits from the target area.

Optionally, the server may determine, based on the second driving data of the target vehicle, whether the target vehicle is inside the target area at the moment t and the moment t-1.

In an implementation, the server may directly determine, based on the second driving data of the target vehicle, whether the target vehicle is inside the target area at the moment t and the moment t-1.

Optionally, the server may determine, in a horizontal direction or a vertical direction, a ray using a positioning point of the target vehicle at the moment t or the moment t-1 as an endpoint, and determine, based on a quantity of intersecting points between the ray and the target area, whether the target vehicle is inside the target area at the moment t and the moment t-1.

If the quantity of intersecting points between the ray and the target area is an odd number, it may be determined that the target vehicle is inside the target area at the moment t or the moment t-1. If the quantity of intersecting points between the ray and the target area is an even number, it may be determined that the target vehicle is not inside the target area at the moment t or the moment t-1.

As shown in FIG. 9, a point O1 is a positioning point of the target vehicle at the moment t-1, and O2 is a positioning point of the target vehicle at the moment t. A ray using the point O1 as an endpoint and a ray using the point O2 as an endpoint are separately determined in a horizontal direction. It may be learned that there is one intersecting point between the ray using O1 as an endpoint and the target area, and there are two intersecting points between the ray using O2 as an endpoint and the target area. Therefore, it may be determined that the target vehicle is inside the target area at the moment t-1 and is outside the target area at the moment t, and the moment t is determined as the moment at which the target vehicle exits from the target area.

Optionally, the server may alternatively separately determine, in a horizontal direction and a vertical direction, rays using positioning points of the target vehicle at the moment t and the moment t-1 as endpoints, that is, may determine two rays, and determine, based on a quantity of intersecting points between each of the two rays and the target area, whether the target vehicle is inside the target area at the moment t and the moment t-1.

In an implementation, the server may determine, based on the second driving data, that the target vehicle is inside a minimum bounding area at the moment t and the moment t-1, and then determine whether the target vehicle is inside the target area at the moment t and the moment t-1.

Optionally, the minimum bounding area may represent an approximate range of the target area, and the minimum bounding rectangle may be a rectangle. As shown in FIG. 8, an area represented by dashed lines is the minimum bounding area.

Optionally, the server may obtain coordinates of two diagonals of the minimum bounding area, and determine a range of the minimum bounding area based on the obtained coordinates. Longitude and latitude data of the target vehicle may be obtained based on the second driving data of the target vehicle, so that coordinates of the target vehicle at the moment t and the moment t-1 can be determined. Then, it may be determined, based on the coordinates of the target vehicle at the moment t and the moment t-1 and the range of the minimum bounding area, that the target vehicle is inside the minimum bounding area at the moment t and the moment t-1.

For example, if the coordinates of the two diagonals of the minimum bounding area are (3, 1) and (6, 4), coordinates of the target vehicle at the moment t are (4, 2), and coordinates at the moment t-1 are (2, 5), the server may determine that the target vehicle is inside the minimum bounding area at the moment t and is not inside the minimum bounding area at the moment t-1.

After determining that the target vehicle is inside the minimum bounding area at the moment t, the server may further determine whether the target vehicle is inside the target area at the moment t. A determining method is described in detail in the foregoing content, and details are not described herein again.

In this embodiment of this application, the server first determines whether the target vehicle is inside the minimum bounding area, and then if the target vehicle is inside the minimum bounding area, determines whether the target vehicle is inside the target area. If the target vehicle is not inside the minimum bounding area, the server may directly determine that the target vehicle is outside the target area. Because a speed of determining whether the target vehicle is inside the minimum bounding area is relatively high, it may be quickly determined whether the target vehicle is inside the target area, to determine in real time whether the target vehicle is to leave the toll station.

Optionally, the server may establish a spatial index based on the target area and the minimum bounding area, and then determine, based on the coordinates of the target vehicle at the moment t and the moment t-1, the range of the minimum bounding area, and the spatial index, that the target vehicle is inside the minimum bounding area at the moment t and the moment t-1.

Optionally, the spatial index may be an R-tree spatial index.

The server may determine minimum bounding areas corresponding to all toll station areas as leaf nodes of an R tree, and a parent node may frame all areas of subnodes of the parent node, to form a minimum boundary area.

For example, C, D, E, F, G, H, I, and J represent minimum bounding areas corresponding to eight toll stations. C, D, E, and F are relatively close to each other, and may form a minimum boundary area A. G, H, I, and J are relatively close to each other, and may form a minimum boundary area B. Therefore, it may be determined that C, D, E, F, G, H, I, and J are leaf nodes, A is a parent node of C, D, E, and F, and B is a parent node of G, H, I, and J. The server may first determine whether the target vehicle is inside the area A or the area B, and if the target vehicle is inside the area A, the server continues to determine the target vehicle is in which area of C, D, E, and F, and does not need to determine whether the target vehicle is in the areas G, H, I, and J.

In the foregoing technical solution, by establishing the spatial index, the server may quickly determine whether the target vehicle is inside the minimum bounding area.

The server may verify the paid information of the target vehicle based on the determined actual vehicle model at the moment at which the target vehicle exits from the target area.

Optionally, the actual vehicle model may be determined by the server based on the first driving data of the target vehicle mentioned in the foregoing content, or may be determined by the server based on the picture of the target vehicle, laser signal of the target vehicle or the like. This is not specifically limited in this embodiment of this application.

Optionally, the server may verify, at the moment at which the target vehicle exits from the target area, whether the target vehicle pays a fee corresponding to the actual vehicle model. If the target vehicle does not perform a payment operation or a paid fee does not correspond to the actual vehicle model, the server may start a series of measures.

In an example, the server may automatically report an abnormality to the system, and the system performs further review.

In an example, the server may reduce a credit score of the target vehicle. When the credit score of the target vehicle is reduced to a specific degree, the server forbids the target vehicle to enter an expressway.

In an example, the server may remotely forbid the target vehicle to use the OBU. If the owner does not perform clarification processing or make supplementary payment in full, the vehicle is prevented from entering an expressway next time.

In this embodiment of this application, the server determines the target area, and may determine the range of the target area based on diagonal coordinates of the target area, and determine the coordinates of the target vehicle based on the driving data of the target vehicle, that is, longitude and latitude. The server may automatically identify, by using the range of the target area and the coordinates of the target vehicle, a behavior that the target vehicle enters or leaves the toll station. When the target vehicle leaves the toll station, the server may identify whether the target vehicle pays the fee. If the server detects that payment of the target vehicle is abnormal, a series of measures are taken to prevent the target vehicle from dodging a toll for the second time. In this way, a toll dodging behavior of the target vehicle can be reduced.

Optionally, the server may determine a driving mileage of the target vehicle on an expressway in a preset time period based on the driving data of the target vehicle, and output the to-be-paid information of the target vehicle based on the actual vehicle model and the driving mileage of the target vehicle.

Optionally, the preset time period may be represented as a time period between a moment when the target vehicle enters an expressway entrance and a moment when the target vehicle leaves an expressway exit each time.

For example, the server may record a toll station for the target vehicle to enter the expressway each time, and the server may send notification information to the on-board apparatus. The notification information may be used to instruct the on-board apparatus to enable track tracing of the target vehicle. The on-board apparatus sends data of the track tracing to the server. The server may determine, based on the data, a driving mileage of the target vehicle on the expressway in the time period between entering the expressway entrance and leaving the expressway exit each time, and then output the to-be-paid information of the target vehicle based on the determined actual vehicle model and the driving mileage of the target vehicle.

Certainly, the on-board apparatus may alternatively enable track tracing of the target vehicle all day. The server may determine the driving mileage of the target vehicle on the expressway based on the toll station for the target vehicle to enter the expressway and the data of the track tracing.

In the foregoing technical solution, the server may identify an actual driving mileage of the target vehicle based on the driving data of the target vehicle, for example, through track tracing. In this way, a card theft behavior of the target vehicle can be avoided, thereby reducing an economic loss caused by a toll dodging behavior during card theft to the operator.

The method provided in the embodiments of this application is described in detail above. To implement the functions in the method provided in the embodiments of this application, the server may include a hardware structure and/or a software module, and implement the functions in a form of a hardware structure, a software module, or a combination of a hardware structure and a software module. Whether a function in the foregoing functions is performed by using a hardware structure, a software module, or a combination of a hardware structure and a software module depends on particular applications and design constraints of the technical solutions.

Based on an inventive concept the same as those of the foregoing method embodiments, an embodiment of this application provides an information processing apparatus, configured to implement the function of the server in the foregoing methods. FIG. 10 is a schematic block diagram of an apparatus according to this embodiment of this application. It should be understood that the information processing apparatus 1000 shown in FIG. 10 is merely an example. The information processing apparatus in this embodiment of this application may further include another module or unit, or a module with a function similar to that of each module in FIG. 10, or may not necessarily include all modules in FIG. 10.

A data receiving module 1010 is configured to obtain driving data of a target vehicle.

A vehicle model identification module 1020 is configured to determine an actual vehicle model of the target vehicle based on first driving data in the driving data.

Optionally, the vehicle model identification module 1020 may be further configured to: determine a driving time distribution and/or a driving track distribution of the target vehicle based on the first driving data; and determine the actual vehicle model of the target vehicle based on the driving time distribution and/or the driving track distribution of the target vehicle.

Optionally, the vehicle model identification module 1020 may be further configured to determine the actual vehicle model of the target vehicle based on a correspondence between at least one driving time distribution and/or driving track distribution and at least one vehicle model and based on the driving time distribution and/or the driving track distribution of the target vehicle.

Optionally, the vehicle model identification module 1020 may be further configured to: obtain, based on driving data of each of the sample vehicles, a probability that each vehicle is classified as each of a plurality of vehicle models, and a driving time distribution and/or a driving track distribution of each vehicle; determine a vehicle model whose vehicle model probability corresponding to a first vehicle is greater than a first threshold as an actual vehicle model of the first vehicle; and obtain the correspondence based on the actual vehicle model of the first vehicle and a driving time distribution and/or a driving track distribution of the first vehicle.

Optionally, the target vehicle includes a plurality of vehicles; the vehicle model identification module 1020 may be further configured to: obtain, based on first driving data of each of the plurality of vehicles, a probability that each vehicle is classified as each of a plurality of vehicle models, and a driving time distribution and/or a driving track distribution of each vehicle; determine a vehicle model whose vehicle model probability corresponding to a first vehicle is greater than a first threshold as an actual vehicle model of the first vehicle; group driving time distributions and/or driving track distributions that are the same in driving time distributions and/or driving track distributions of the plurality of vehicles into one type of driving time distribution and/or driving track distribution; for vehicles corresponding to each type of driving time distribution and/or driving track distribution, determine a proportion of the first vehicle in vehicles of each vehicle model; for the vehicles corresponding to each type of driving time distribution and/or driving track distribution, determining a target vehicle model whose proportion of the first vehicle is greater than a second threshold; and for a second vehicle in the vehicles corresponding to each type of driving time distribution and/or driving track distribution, determining the target vehicle model as a vehicle model of the second vehicle, where the second vehicle is a vehicle in the plurality of vehicles except the first vehicle.

Optionally, the vehicle type recognition module 1020 may be further configured to: identify parking points of the target vehicle based on the first driving data; determine frequently-used parking points of the target vehicle based on appearance frequency of the parking points; determine geographical locations of the frequently-used parking points based on map information; and combine and connect frequent itemsets of the frequently-used parking points based on the geographical locations of the frequently-used parking points to obtain the driving track distribution of the target vehicle.

Optionally, the vehicle type recognition module 1020 may be further configured to: sequentially determine circles by using different positioning points of the target vehicle as centers and a third threshold as a radius; determine a maximum time difference between positioning points in each circle; compare the maximum time difference with a fourth threshold, and if the maximum time difference is greater than the fourth threshold, determine a center of the circle corresponding to the maximum time difference as a candidate parking point; and calculate a central point of all candidate parking points, where the central point is a parking point of the target vehicle.

Optionally, the vehicle type recognition module 1020 may be further configured to: obtain, based on the first driving data and a first model, probabilities that the target vehicle is classified as different vehicle models, where the first model is obtained through training based on a registered vehicle model of a sample vehicle in an OBU and driving data of the sample vehicle; and determine the actual vehicle model of the target vehicle based on the probabilities.

Optionally, the information processing apparatus 1000 may further include a service information module 1030, and the service information module 1030 may be configured to verify service behavior information of the target vehicle or output the service behavior information of the target vehicle based on the actual vehicle model.

Optionally, the information processing apparatus 1000 may further include a toll station area detection module 1040, configured to: determine, based on second driving data in the driving data and a target area, a moment at which the target vehicle exits from the target area.

Optionally, the service information module 1030 may be further configured to verify, at the moment at which the target vehicle exits from the target area, whether the target vehicle pays a fee corresponding to the actual vehicle model.

Optionally, the toll station area detection module 1040 may be further configured to: determine, based on the second driving data, whether the target vehicle is inside the target area at a moment t and a moment t-1; and if the target vehicle is inside the target area at the moment t-1 and is outside the target area at the moment t, determine that the moment t is the moment at which the target vehicle exits from the target area.

Optionally, the toll station area detection module 1040 may be further configured to: determine, in a horizontal direction or a vertical direction, a ray using a positioning point of the target vehicle at the moment t or the moment t-1 as an endpoint; and determine, based on a quantity of intersecting points between the ray and the target area, whether the target vehicle is inside the target area at the moment t and the moment t-1.

Optionally, the toll station area detection module 1040 may be further configured to: if the quantity of intersecting points between the ray and the target area is an odd number, determine that the target vehicle is inside the target area at the moment t or the moment t-1; and if the quantity of intersecting points between the ray and the target area is an even number, determine that the target vehicle is outside the target area at the moment t or the moment t-1.

Optionally, the toll station area detection module 1040 may be further configured to: determine, based on the second driving data, that the target vehicle is inside a minimum bounding area of the target area at the moment t and the moment t-1, where the minimum bounding area is a rectangle.

Optionally, the toll station area detection module 1040 may be further configured to: obtain coordinates of two diagonals of the minimum bounding area; determine a range of the minimum bounding area based on the coordinates; obtain coordinates of the target vehicle at the moment t and the moment t-1 based on the second driving data; and determine, based on the coordinates of the target vehicle at the moment t and the moment t-1 and the range of the minimum bounding area, that the target vehicle is inside the minimum bounding area at the moment t and the moment t-1.

Optionally, the toll station area detection module 1040 may be further configured to establish a spatial index based on the target area and the minimum bounding area.

Optionally, the toll station area detection module 1040 may be further configured to determine, based on the coordinates of the target vehicle at the moment t and the moment t-1, the range of the minimum bounding area, and the spatial index, that the target vehicle is inside the minimum bounding area at the moment t and the moment t-1.

Optionally, the service information module 1030 may be further configured to verify paid information of the target vehicle or outputting to-be-paid information of the target vehicle based on the actual vehicle model.

Optionally, the information processing apparatus 1000 may further include a driving mileage verification module 1050 module, configured to determine a driving mileage of the target vehicle on an expressway in a preset time based on the first driving data.

Optionally, the service information module 1030 may be further configured to output the to-be-paid information of the target vehicle based on the actual vehicle model and the driving mileage.

Optionally, the information processing apparatus 1000 may further include an exception detection module 1060, and the exception detection module 1060 may be configured to identify noise data in the driving data.

Optionally, the information processing apparatus 1000 may further include a track correction module 1070, and the track correction module 1070 may be configured to correct the noise data to obtain corrected driving data.

Optionally, the toll station area detection module 1330 may be further configured to determine a first moment and a second moment based on the corrected driving data and the target area.

Optionally, the information processing apparatus 1000 may further include an exception detection module 1140, and the exception detection module 1140 may be configured to identify noise data in the driving data.

Optionally, the information processing apparatus 1100 may further include a track correction module 1150, and the track correction module 1150 may be configured to correct the noise data to obtain corrected driving data.

Optionally, the vehicle model identification module 1020 may be further configured to determine an actual vehicle model of the target vehicle based on first driving data in the corrected driving data.

It should be understood that the information processing apparatus 1000 may perform the actions of the server in the method provided in the embodiments of this application. To avoid repetition, detailed descriptions thereof are omitted herein.

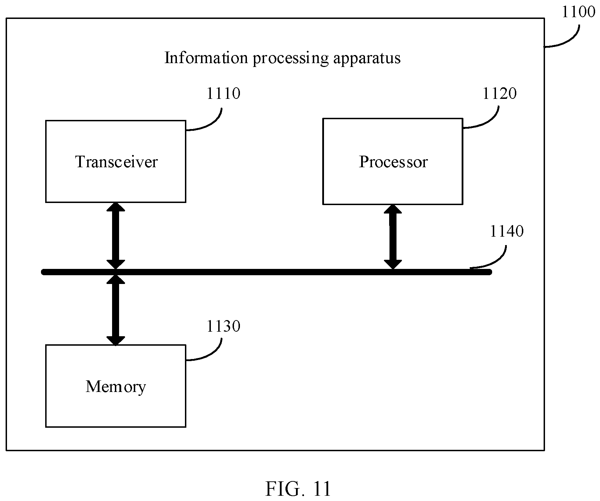

FIG. 11 shows an information processing apparatus 1100 according to an embodiment of this application. The information processing apparatus 1100 is configured to implement the function of the server in the method provided in the embodiments of this application. The apparatus 1100 includes a processor 1120, configured to implement the function of the server in the method provided in the embodiments of this application. For example, the processor 1120 may be configured to determine an actual vehicle model of a target vehicle based on first driving data in driving data. For details, refer to detailed descriptions in the method examples. Details are not described herein again.

The apparatus 1100 may further include a memory 1130, configured to store a program instruction and/or data. The memory 1130 is coupled to the processor 1120. The processor 1120 may operate with the memory 1130 together. The processor 1120 may execute the program instruction stored in the memory 1130.

The apparatus 1100 may further include a transceiver 1110, configured to communicate with another device through a transmission medium, so that an apparatus in the apparatus 1100 may communicate with another device. The processor 1120 receives and sends information by using the transceiver 1110, and is configured to implement the method performed by the server in the method embodiments of this application.

In this embodiment of this application, a specific connection medium between the transceiver 1110, the processor 1120, and the memory 1130 is not limited. In this embodiment of this application, the memory 1130, the processor 1120, and the transceiver 11210 are connected by using a bus 1140 in FIG. 11. The bus is represented by using a bold line in FIG. 11. A connection manner of other components is merely an example for description, but is not limited thereto. The bus may be classified into an address bus, a data bus, a control bus, and the like. For ease of representation, only one thick line is used to represent the bus in FIG. 11, but this does not mean that there is only one bus or only one type of bus.

It should be understood that, in the embodiments of this application, "first" and "second" are merely intended to distinguish between different objects, but do not constitute a limitation on the scope of the embodiments of this application.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

In this embodiment of this application, the processor may be a central processing unit (central processing unit, CPU), a general purpose processor, a network processor (network processor, NP), a digital signal processor (digital signal processing, DSP), a microprocessor, a microcontroller, a programmable logic device (programmable logic device, PLD), or any combination thereof.

In this embodiment of this application, the memory may be a volatile memory (volatile memory), for example, a random-access memory (random-access memory, RAM). The memory may alternatively include a nonvolatile memory (non-volatile memory), for example, a flash memory (flash memory), a hard disk drive (hard disk drive, HDD for short), or a solid-state drive (solid-state drive, SSD). The memory may alternatively include a combination of the foregoing types of memories. The memory may alternatively be any other medium that can be configured to carry or store expected program code in a form of an instruction or a data structure and that can be accessed by a computer, but is not limited thereto.

It should be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

All or some of the foregoing methods in the embodiments of this application may be implemented by means of software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, a network device, a user device, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information processing method, comprising:

    obtaining driving data of a target vehicle; and
    determining an actual vehicle model of the target vehicle based on first driving data in the driving data.

2. The method according to claim 1, wherein the determining an actual vehicle model of the target vehicle based on first driving data comprises:

    determining a driving time distribution and/or a driving track distribution of the target vehicle based on the first driving data; and
    determining the actual vehicle model of the target vehicle based on the driving time distribution and/or the driving track distribution of the target vehicle.

3. The method according to claim 2, wherein the determining the actual vehicle model of the target vehicle based on the driving time distribution and/or the driving track distribution of the target vehicle comprises: determining the actual vehicle model of the target vehicle based on a correspondence between at least one driving time distribution and/or driving track distribution and at least one vehicle model and based on a waveform mode and/or the driving track distribution of the target vehicle.

4. The method according to claim 3, wherein the correspondence is obtained by using driving data of sample vehicles in the following manner:

    obtaining, based on driving data of each of the sample vehicles, a probability that each vehicle is classified as each of a plurality of vehicle models, and a driving time distribution and/or a driving track distribution of each vehicle;
    determining a vehicle model whose vehicle model probability corresponding to a first vehicle is greater than a first threshold as an actual vehicle model of the first vehicle;
    obtaining the correspondence based on the actual vehicle model of the first vehicle and a driving time distribution and/or a driving track distribution of the first vehicle.

5. The method according to claim 2, wherein the target vehicle comprises a plurality of vehicles; and the determining the vehicle model of the target vehicle based on the driving time distribution and/or the driving track distribution of the target vehicle comprises:

    obtaining, based on first driving data of each of the plurality of vehicles, a probability that each vehicle is classified as each of a plurality of vehicle models, and a driving time distribution and/or a driving track distribution of each vehicle;
    determining a vehicle model whose vehicle model probability corresponding to a first vehicle is greater than a first threshold as an actual vehicle model of the first vehicle;
    grouping driving time distributions and/or driving track distributions that are the same in driving time distributions and/or driving track distributions of the plurality of vehicles into one type of driving time distribution and/or driving track distribution;
for vehicles corresponding to each type of driving time distribution and/or driving track distribution, determining a proportion of the first vehicle in vehicles of each vehicle model;
for the vehicles corresponding to each type of driving time distribution and/or driving track distribution, determining a target vehicle model whose proportion of the first vehicle is greater than a second threshold; and
for a second vehicle in the vehicles corresponding to each type of driving time distribution and/or driving track distribution, determining the target vehicle model as a vehicle model of the second vehicle, wherein the second vehicle is a vehicle in the plurality of vehicles except the first vehicle.

6. The method according to any one of claims 2 to 5, wherein the determining a driving time distribution and/or a driving track distribution of the target vehicle based on the first driving data comprises:

    identifying parking points of the target vehicle based on the first driving data;
    determining frequently-used parking points of the target vehicle based on appearance frequency of the parking points;
    determining geographical locations of the frequently-used parking points based on map information; and
    combining and connecting frequent itemsets of the frequently-used parking points based on the geographical locations of the frequently-used parking points to obtain the driving track distribution of the target vehicle.

7. The method according to claim 6, wherein the identifying parking points of the target vehicle based on the first driving data comprises:

    sequentially determining circles by using different positioning points of the target vehicle as centers and a third threshold as a radius;
    determine a maximum time difference between positioning points in each circle;
    comparing the maximum time difference with a fourth threshold, and if the maximum time difference is greater than the fourth threshold, determining a center of the circle corresponding to the maximum time difference as a candidate parking point; and
    calculating a central point of all candidate parking points, wherein the central point is a parking point of the target vehicle.

8. The method according to claim 1, wherein the determining an actual vehicle model of the target vehicle based on first driving data comprises:

    obtaining, based on the first driving data and a first model, probabilities that the target vehicle is classified as different vehicle models, wherein the first model is obtained through training based on a registered vehicle model of a sample vehicle in an on-board unit OBU and driving data of the sample vehicle; and
    determining the actual vehicle model of the target vehicle based on the probabilities.

9. The method according to any one of claims 1 to 8, wherein the method further comprises:
verifying service behavior information of the target vehicle or outputting the service behavior information of the target vehicle based on the actual vehicle model.

10. The method according to claim 9, wherein the method further comprises:

    determining, based on second driving data in the driving data and a target area, a moment at which the target vehicle exits from the target area, wherein the target area is an area of a toll station; and
    the verifying service behavior information of the target vehicle or outputting the service behavior information of the target vehicle based on the actual vehicle model comprises:
    verifying, at the moment at which the target vehicle exits from the target area, whether the target vehicle pays a fee corresponding to the actual vehicle model.

11. The method according to claim 10, wherein the determining, based on second driving data and a target area, a moment at which the target vehicle exits from the target area comprises:

    determining, based on the second driving data, whether the target vehicle is inside the target area at a moment t and a moment t-1; and
    if the target vehicle is inside the target area at the moment t-1 and is outside the target area at the moment t, determining that the moment t is the moment at which the target vehicle exits from the target area.

12. The method according to claim 11, wherein the determining, based on the second driving data, whether the target vehicle is inside the target area at a moment t and a moment t-1 comprises:

    determining, in a horizontal direction or a vertical direction, a ray using a positioning point of the target vehicle at the moment t or the moment t-1 as an endpoint; and

determining, based on a quantity of intersecting points between the ray and the target area, whether the target vehicle is inside the target area at the moment t and the moment t-1.

13. The method according to claim 12, wherein the determining, based on a quantity of intersecting points between the ray and the target area, whether the target vehicle is inside the target area at the moment t and the moment t-1 comprises:

if the quantity of intersecting points between the ray and the target area is an odd number, determining that the target vehicle is inside the target area at the moment t or the moment t-1; and

if the quantity of intersecting points between the ray and the target area is an even number, determining that the target vehicle is outside the target area at the moment t or the moment t-1.

14. The method according to any one of claims 11 to 13, wherein the determining, based on the second driving data, whether the target vehicle is inside the target area at a moment t and a moment t-1 further comprises:

determining, based on the second driving data, that the target vehicle is inside a minimum bounding area of the target area at the moment t and the moment t-1, wherein the minimum bounding area is a rectangle.

15. The method according to claim 14, wherein the determining, based on the second driving data, that the target vehicle is inside a minimum bounding area of the target area at the moment t and the moment t-1 comprises:

obtaining coordinates of two diagonals of the minimum bounding area;

determining a range of the minimum bounding area based on the coordinates;

obtaining coordinates of the target vehicle at the moment t and the moment t-1 based on the second driving data; and

determining, based on the coordinates of the target vehicle at the moment t and the moment t-1 and the range of the minimum bounding area, that the target vehicle is inside the minimum bounding area at the moment t and the moment t-1.

16. The method according to claim 15, wherein the method further comprises:

establishing a spatial index based on the target area and the minimum bounding area; and

the determining, based on the coordinates of the target vehicle at the moment t and the moment t-1 and the range of the minimum bounding area, that the target vehicle is inside the minimum bounding area at the moment t and the moment t-1 comprises:

determining, based on the coordinates of the target vehicle at the moment t and the moment t-1, the range of the minimum bounding area, and the spatial index, that the target vehicle is inside the minimum bounding area at the moment t and the moment t-1.

17. The method according to claim 9, wherein the verifying service behavior information of the target vehicle or outputting the service behavior information of the target vehicle based on the actual vehicle model comprises:

verifying paid information of the target vehicle or outputting to-be-paid information of the target vehicle based on the actual vehicle model.

18. The method according to claim 17, wherein the method further comprises:

determining a driving mileage of the target vehicle on an expressway in a preset time based on the first driving data; and

the verifying paid information of the target vehicle or outputting to-be-paid information of the target vehicle based on the actual vehicle model comprises:

outputting the to-be-paid information of the target vehicle based on the actual vehicle model and the driving mileage.

19. The method according to claim 17 or 18, wherein the paid information comprises a registered vehicle model sent by the OBU during payment.

20. The method according to any one of claims 1 to 19, wherein before the determining an actual vehicle model of the target vehicle based on first driving data in the driving data, the method further comprises:

identifying noise data in the driving data;

correcting the noise data to obtain corrected driving data; and

the determining an actual vehicle model of the target vehicle based on first driving data in the driving data comprises:

determining the actual vehicle model of the target vehicle based on the first driving data in the corrected driving data.

21. An information processing apparatus, comprising a processor and a memory, wherein

the memory is configured to store a program instruction; and

the processor is configured to invoke and execute the program instruction stored in the memory, to implement the method according to any one of claims 1 to 20.

22. An electronic toll collection ETC system, wherein the ETC system comprises the vehicle information processing apparatus according to claim 21.

23. A computer-readable storage medium, comprising an instruction, wherein when the instruction is executed on a computer, the computer is enabled to perform the method according to any one of claims 1 to 20.

ETC system

On-board device
110

Dedicated short range communication

Roadside device
120

Server
130

100

FIG. 1

Obtain driving data of a target vehicle
210

Determine an actual vehicle model of the target vehicle based on first driving data in the driving data
220

FIG. 2

FIG. 3

210

Obtain driving data of a target vehicle

220
410

Determine a waveform mode and/or a track mode of the target vehicle
based on the first driving data

420

Determine an actual vehicle model of the target vehicle based on the
waveform mode and/or the track mode of the target vehicle

FIG. 4

FIG. 5

P8

P7

P6

P1

P3

P2

Parking point s

P5

P4

FIG. 6

210

Obtain driving data of a target vehicle

220

710

Obtain, based on the first driving data and a first preset model, probabilities that the target vehicle is classified as different vehicle models

720

Determine an actual vehicle model of the target vehicle based on the probabilities

FIG. 7

FIG. 8

FIG. 9

Information processing apparatus 1000

Data receiving module 1010

Vehicle model identification module 1020

FIG. 10

1100

Information processing apparatus

1110

Transceiver

1120

Processor

1140

1130

Memory

FIG. 11

## INTERNATIONAL SEARCH REPORT

| International application No. |
|---|
| **PCT/CN2018/105889** |

**A.    CLASSIFICATION OF SUBJECT MATTER**

G08G 1/015(2006.01)i

According to International Patent Classification (IPC) or to both national classification and IPC

**B.    FIELDS SEARCHED**

Minimum documentation searched (classification system followed by classification symbols)

G08G

Documentation searched other than minimum documentation to the extent that such documents are included in the fields searched

Electronic data base consulted during the international search (name of data base and, where practicable, search terms used)

WPI, EPODOC, CNPAT, CNKI, IEEE, GOOGLE: 行驶, 时间, 轨迹, 车型, 车辆类型, 实际, 对应, 分类, 概率, 停留, 地理, 收费, 注册, 高速路, driving, time, trajectory, model, vehicle w type, actual, correspondence, category, probability, stay, geography, charge, registration, highway

**C.    DOCUMENTS CONSIDERED TO BE RELEVANT**

| Category* | Citation of document, with indication, where appropriate, of the relevant passages | Relevant to claim No. |
|---|---|---|
| X | CN 102402861 A (JIN, QINGJIANG) 04 April 2012 (2012-04-04)<br>    description, paragraphs [0014]-[0018], and figure 1 | 1-2 |
| A | CN 107154151 A (BEIJING CHEBOHE TECHNOLOGY CO., LTD.) 12 September 2017 (2017-09-12)<br>    entire document | 1-23 |
| A | CN 105946796 A (HAOYU TIANDI (TIANJIN) TECHNOLOGY CO., LTD.) 21 September 2016 (2016-09-21)<br>    entire document | 1-23 |
| A | US 2005278214 A1 (TAKIDA, Y.) 15 December 2005 (2005-12-15)<br>    entire document | 1-23 |
| A | US 2009313096 A1 (MITSUBISHI HEAVY INDUSTRIES, LTD.) 17 December 2009 (2009-12-17)<br>    entire document | 1-23 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 October 2018** | **07 November 2018** |

| Name and mailing address of the ISA/CN | Authorized officer |
|---|---|
| **State Intellectual Property Office of the P. R. China**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2018/105889**

| Patent document cited in search report | | | Publication date (day/month/year) | Patent family member(s) | | | Publication date (day/month/year) |
|---|---|---|---|---|---|---|---|
| CN | 102402861 | A | 04 April 2012 | None | | | |
| CN | 107154151 | A | 12 September 2017 | None | | | |
| CN | 105946796 | A | 21 September 2016 | None | | | |
| US | 2005278214 | A1 | 15 December 2005 | JP | WO2004038663 | A1 | 23 February 2006 |
| | | | | CN | 1695171 | A | 09 November 2005 |
| | | | | CA | 2501153 | A1 | 06 May 2004 |
| | | | | US | 2005097018 | A1 | 05 May 2005 |
| | | | | AU | 2002354362 | A1 | 13 May 2004 |
| | | | | WO | 2004038663 | A1 | 06 May 2004 |
| | | | | EP | 1508878 | A1 | 23 February 2005 |
| | | | | EP | 1548652 | A2 | 29 June 2005 |
| | | | | KR | 20050091700 | A | 15 September 2005 |
| | | | | RU | 2336569 | C2 | 20 October 2008 |
| US | 2009313096 | A1 | 17 December 2009 | CN | 101473353 | A | 01 July 2009 |
| | | | | EP | 2034451 | A1 | 11 March 2009 |
| | | | | JP | 2008004017 | A | 10 January 2008 |
| | | | | WO | 2008001714 | A1 | 03 January 2008 |
| | | | | KR | 20090018158 | A | 19 February 2009 |
| | | | | IN | 200807137 | P4 | 27 March 2009 |
| | | | | SG | 148728 | A1 | 27 February 2009 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810147439